# EUROPEAN PATENT SPECIFICATION

(11) **EP 1 293 264 B1**
(45) Date of publication and mention of the grant of the patent: **20.12.2006**
(21) Application number: 02711476.8
(22) Date of filing: 12.02.2002
(51) Int. Cl.: B06B 1/04, B06B 1/16, H02K 23/58, H02K 7/065, H02K 5/22

(54) **SMALL-SIZED VIBRATING MOTOR**
KLEINER VIBRATIONSMOTOR
MOTEUR A VIBRATIONS DE PETITE TAILLE

(30) Priority: 15.02.2001 JP 2001038008
(43) Date of publication of application: 19.03.2003
(73) Proprietor: NAMIKI SEIMITSU HOUSEKI KABUSHIKI KAISHA, Tokyo 123-8511 (JP)
(72) Inventor: YASUDA, Hisafumi, NAMIKI SEIMITSU HOUSEKI K.K., Adachi-ku, Tokyo 123-8511 (JP); WAKATSUKI, Yoshiharu, NAMIKI SEIMITSU HOUSEKI K.K., Adachi-ku, Tokyo 123-8511 (JP)
(74) Representative: Sties, Jochen
(86) International application number: PCT/JP2002/001161
(87) International publication number: WO 2002/064269

(56) References cited:
- JP-A- 10 014 143
- JP-A- 11 069 730
- JP-U- 55 062 157
- US-A- 5 107 155
- US-A- 5 373 207
- PATENT ABSTRACTS OF JAPAN vol. 1998, no. 13, 30 November 1998 (1998-11-30) -& JP 10 215546 A (NAMIKI PRECISION JEWEL CO LTD), 11 August 1998 (1998-08-11)
- PATENT ABSTRACTS OF JAPAN vol. 1999, no. 03, 31 March 1999 (1999-03-31) & JP 10 322971 A (TOKYO PARTS IND CO LTD), 4 December 1998 (1998-12-04)

## Description

### FIELD OF INDUSTRIAL

The invention relates to a small, vibrating motor according to the preamble of Claims 1. In particular, this invention concerns improvement of a small, vibrating motor used in pagers, mobile telephones or other communications equipment as an alarm mechanism that rings by means of vibration.

### PRIOR TECHNOLOGY

A small, vibrating motor including the features of the preambles of Claim 1 is known from US-A-5,107,155.

JP 10215546 shows a small vibrating motor comprising a magnetic yoke within which an excitation coil is fixed. An eccentric weight is mounted on the outer periphery of the magnetic yoke.

Small, vibrating motors of this sort generally have at their center a shaft that serves as a base for assembly. The stator is assembled of field magnets fixed around the center line of the shaft, and the rotor is assembled of an excitation coil that accommodates within its diameter the field magnets separated by a magnetic gap; a magnetic yoke with the excitation coil attached within its inner periphery; and bearings that support at both ends, in a way that it is free to rotate, both ends of the yoke, which includes an eccentric weight. The semi-cylindrical eccentric weight is attached to the outer periphery of the yoke.

In this small, vibrating motor, the rotor, which is the rotating body, is located on the outside, and so it is best to enclose the entire motor, including the stator and the rotor, in an external case that is suited to surface mounting by a pick-up means such as a chuck or suction nozzle. However, when the rotor and eccentric weight are located on the outside, it is necessary to assemble the motor keeping the case parallel to the shaft, which is the base for assembly, to prevent the eccentric weight from rubbing against the inner surface of the case.

In the past, mounting in the external case has been done by assembling the brushes and bearings on the center line of the shaft, from both ends, with the field magnets in between, and so the cylindrical external case would accommodate the entire motor, including the stator and rotor, and by fitting the brush seat and bearings into the open ends of the case, the external case is hung between the brush seat and bearings (as in JPO Kokai Patent H9-37510 of 1998, for example).

In the process of mounting this external case, such things as the external shape and precision of fitting of the brushes and bearings that are fitted into the open end of the external case have an effect on the parallel relationship between the external case and the shaft that serves as a base for assembly, and so it is necessary to control them closely. In addition to keeping the external case parallel, it is necessary that it be fixed firmly to avoid any shakiness or misalignment when the motor is operated.

In addition, the rotor that is the rotating body must also be assembled parallel to the shaft, which is the base for assembly, and so that much more time and labor is required for assembly of the external case and the motor as a whole.

This invention is focused on the process of mounting the external case, and has the purpose of providing a small, vibrating motor that can be easily assembled by accurate parallel movement of the external case relative to the shaft, which is the base for assembly.

Together with that, this invention has the purpose of providing a small, vibrating motor that can be assembled by moving the external case in parallel and firmly fixing the external case so that there is no shakiness or misalignment when the motor is operated.

Also, this invention has the purpose of providing a small, vibrating motor that can be easily mounted on the circuit board of the main equipment.

In addition, this invention has the purpose of providing a small, vibrating motor that can be easily assembled by moving accurately in parallel with the shaft, which is the base for assembly.

Further, this invention has the purpose of providing a small, vibrating motor that can be assembled with the excitation coil and the magnetic yoke reliably combined as one piece.

The purposes stated above are based on technical items, and other purposes will become clear on the basis of the mode of implementation of this invention as described below.

### PRESENTATION OF INVENTION

In the small, vibrating motor of this invention, the shaft that is the base for assembly is at the center, and the stator comprises field magnets fixed around the center line. A rotor is made up of an excitation coil that accommodates within its diameter the field magnets, separated by a magnetic gap; a magnetic yoke; and bearings that support, so that it is free to rotate, the yoke, which includes the eccentric weight, fitted around the center line from both ends, with the field magnets in between. The bearings at one end have a commutator that connects electrically to the excitation coil of the rotor, and brushes that make sliding contact with the commutator are mounted in a brush seat that is assembled with the bearing at one end of the shaft. There is a cup-shaped external case that is open at one end and closed at the other end, with a rising tube in the center of the closed end; the external case accommodates the stator and rotor and the end of the shaft opposite that where the brush seat is assembled. That end of the shaft is fitted into the rising tube from the inside of the external case, thus holding the external case in a position parallel to the shaft, and the brush seat that is assembled on the shaft at the open end of the external case is fitted into the open end of the external case, such that the case is held in place by the shaft and the brush seat. The excitation coil is fixed within the magnetic yoke. An eccentric weight is mounted on the outer periphery of the magnetic yoke. According to a first aspect of the invention, there is a magnetic yoke having a sunken concavity with a through hole opened in the inward surface formed curving inward from one end, and the bearing on one end is fitted through the through hole of the sunken concavity and fastened to the magnetic yoke as a single piece. That bearing is fitted on the shaft around its center line, and so the magnetic yoke is mounted in a position that is set in parallel with the shaft.

Further, in the small vibrating motor of this invention, there is a magnetic yoke having a sunken concavity with a through hole opened in the inward surface formed curving inward from one end, and the bearing on one end is fitted through the through hole of the sunken concavity and molded as a single piece with the magnetic yoke. That bearing is fitted on the shaft around its center line, and so the magnetic yoke is mounted in a position that is set in parallel with the shaft.

Further, in the small vibrating motor of this invention, there is an external case that has stop claws cut and curved inward at the open end, so that the stop claws, by engaging the outer surface of the brush seat that is fitted into the open end, can fix the external shell firmly to the brush seat.

Further, brushes that connect electrically with external terminals are set in the brush seat, and the external case is flat where it faces the surface of the circuit board where the power feed lands, to which the external terminals are connected electrically, are located.

Further, there is a magnetic yoke having a sunken concavity formed curving inward from one end, separated from the inner periphery by a fixed gap, with one end of the excitation coil fitted into that gap and the excitation coil fixed to the inner surface and assembled as a single piece with the magnetic yoke.

### BRIEF EXPLANATION OF DRAWINGS

Figure 1 is a side section showing the small, vibrating motor of one mode of implementation of this invention.
Figure 2 is an explanatory drawing showing the attachment of the external terminals of that motor.
Figure 3 is a side section showing the external case of that motor.
Figure 4 is a left end view showing that motor.
Figure 5 is a right end view showing that motor.
Figure 6 is a partial side section showing the bearing at one end of that motor.
Figure 7 is a partial side section showing the bearing at the other end of that motor.
Figure 8 is an explanatory drawing showing the external terminals of that motor mounted to connect electrically with the power feed lands of the circuit board.

### OPTIMUM MODE OF IMPLEMENTATION

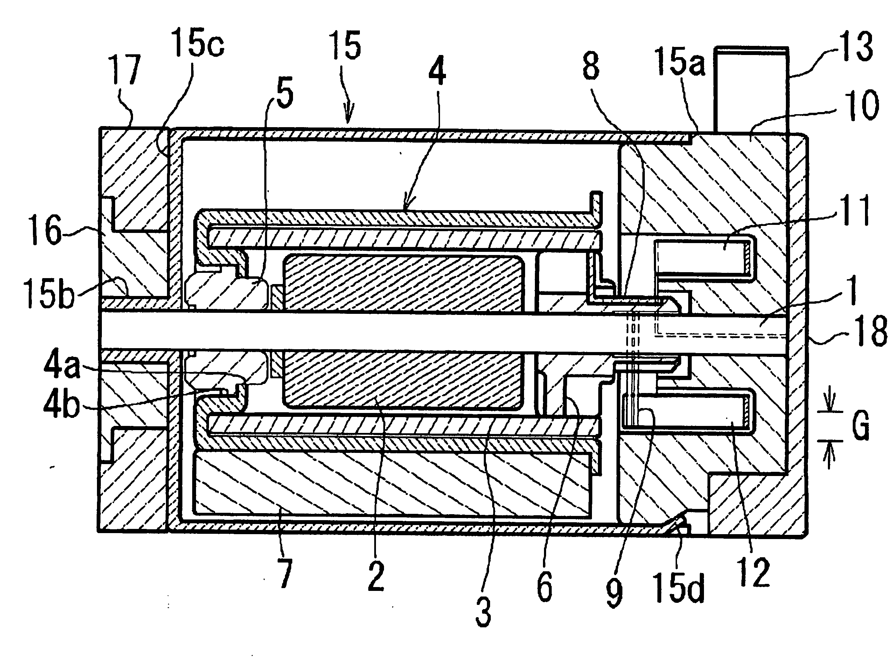

The explanation below refers to the mode of implementation shown in the drawings. The mode of implementation shown in the drawings is an example of a small, vibrating motor used in pagers, mobile telephones or other communications equipment as an alarm mechanism that rings by means of vibration. This small, vibrating motor is assembled with a shaft 1 at its center, and a stator and a rotor assembled with the shaft 1 as an assembly base, as shown in figure 1.

In this small, vibrating motor, the stator has the shaft las a fixed axis, with a cylindrical field magnet 2 mounted on the center line of the shaft 1, which passes through a central hole in the field magnet 2.

The rotor comprises a cylindrical excitation coil 3 that accommodates the field magnet 2 within its diameter and which is separated from the field magnet 2 by a magnetic gap G, a cylindrical magnetic yoke 4 that has the excitation coil 3 fixed within it by an adhesive (unlabeled), and bearings 5, 6 that are fitted around the center line at both ends of the shaft 1, with the field magnet 2 between them. A semi-cylindrical eccentric weight 7 is attached to the outer periphery of the magnetic yoke 4, and the magnetic yoke 4 including the eccentric weight 7 is supported such that it is free to rotate.

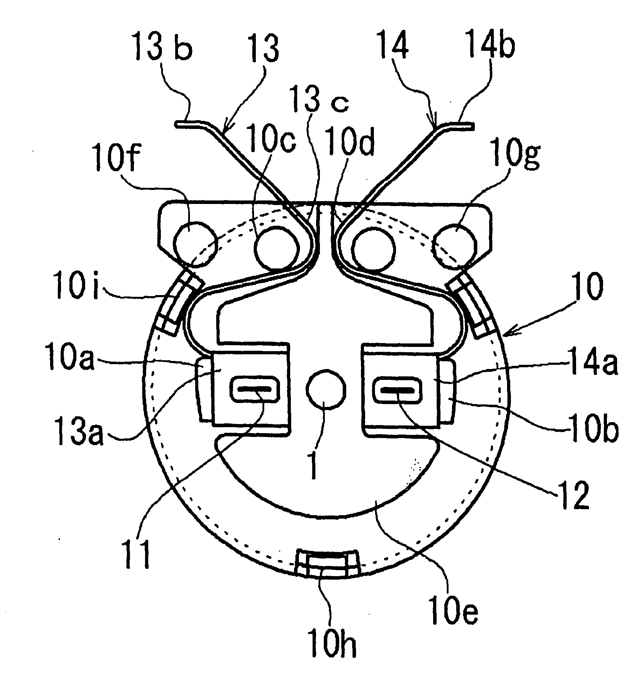

The electrical circuit includes the commutator 8 that is connected electrically to the excitation coil 3 and mounted on the bearing at one end, and the brushes 9 that slide against the commutator 8 are set in a brush seat 10 that is assembled at one end of the shaft 1. The brush seat 10 also serves as a terminal seat; it is assembled so that conductive plates 11, 12 that hold the brushes 9 are inserted through to its interior, and external terminals 13, 14, as shown in figure 2, are connected electrically to extensions of the conductive plates 11, 12.

The external terminals 13, 14 are a symmetrical pair of leaf springs bent in an S-shape, extending up from the attachment bases 13a, 14a to spring terminals 13b, 14b. The external terminals 13, 14 have attachment bases 13a, 14a that are bent into a squared U-shape and that are fitted and fixed to projections 10a, 10b on the brush seat 10, and they have upper curves 13c, 14c that are located where they can be stopped and supported by stop pins 10c, 10d of the brush seat 10; the two are separated by a center bar 10e on the brush seat 10. The spring terminals 13b, 14b extend outward at a slant, and are rounded outward at their upper ends.

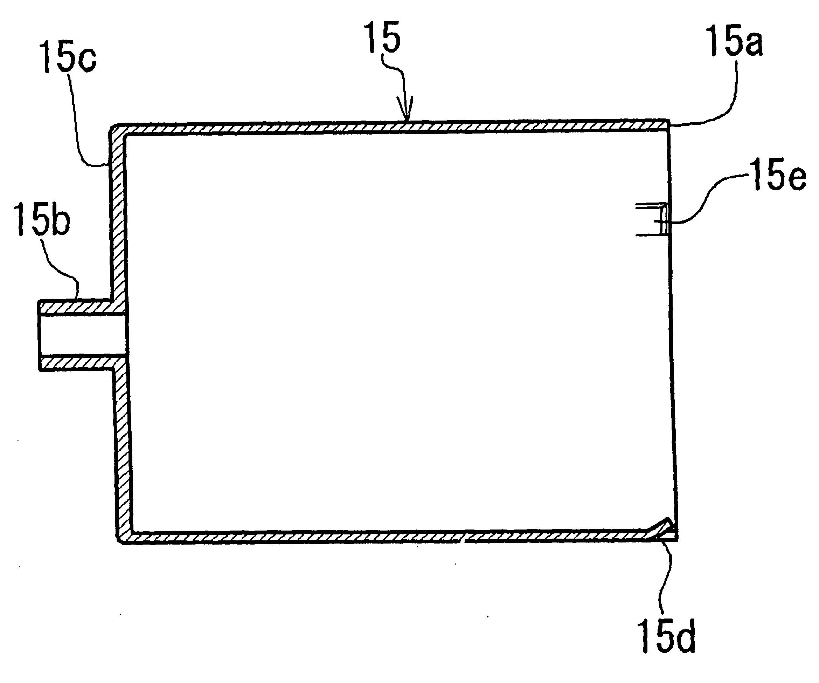

With the constitution described above as the basic mode, this small, vibrating motor is assembled with the stator and rotor accommodated inside the external case 15. The external case 15, as shown in figure 3, is cup-shaped, being open at one end 15a while the other end is closed, with a small-diameter cylindrical rising tube 15b located in the center of the closed face 15c.

With one end of the shaft 1 fitted inside the rising tube 15b, the external case 15 accommodates the brush seat 10 that is assembled on the other end of the shaft 1, and also the stator and rotor. By assembling the brush seat 10 on the end of the shaft 1 and fitting it into the open end 15a, it is possible to have the shaft 1 and the brush seat 10 held firmly together.

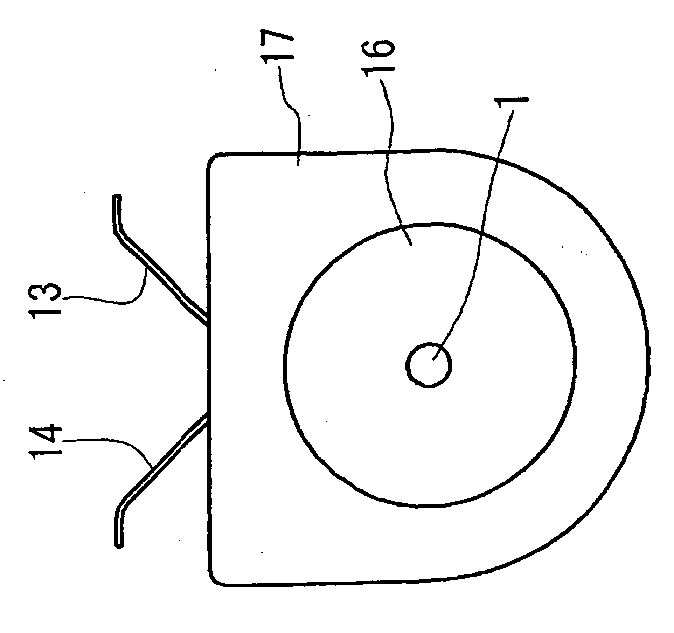

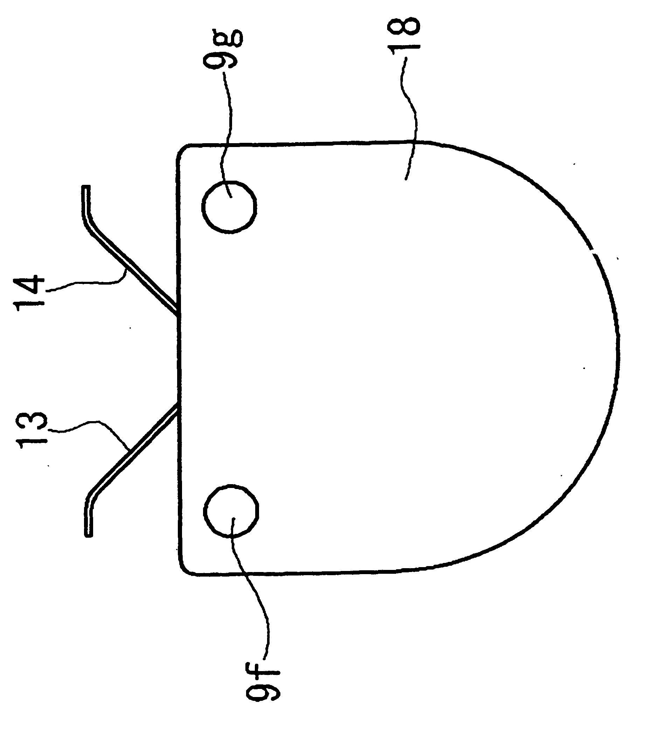

In addition to the constituent parts described above, there is an end cap 16 that is fitted and fixed to the outside of the rising tube 15 at one end of the external case 15, as shown in figures 1 and 4. By pushing the end cap 16 into place, a holder 17 made of a flexible material such as rubber or resin is fastened to the closed face 15c of the external case 15. And as shown in figure 5, a holder 18 made of a flexible material such as rubber or resin is fastened to the brush seat 10 by means of columnar stop pins 10f, 10g (see figure 2).

In the small, vibrating motor constituted in this way, the rising tube 15b of the external case is held lengthwise to the center line of the shaft 1. By this means, the external case 15 can be accurately positioned parallel to the shaft 1 which is the assembly base, and so assembly can be accomplished easily without the eccentric weight 7 scraping the inner surface of the external case 15.

In the constitution described above, the external case 15 has approximately three stop claws 15d, 15e ... cut and curved inward at the open end 15a (see figure 3), spaced at even intervals; the open end 15a of the external case 15 can be fitted and fixed to the brush seat 10 by engaging these stop claws 15d, 15e ... with the outer surface of the brush seat 10. By this means, the external case 15 will be kept parallel, and will be fastened securely so that no shakiness or misalignment will accompany the vibration. Now, it is also possible to have receiving grooves 10h, 10i... on the outer surface of the brush seat 10 (see figure 2) to match the stop claws 15d, 15e...

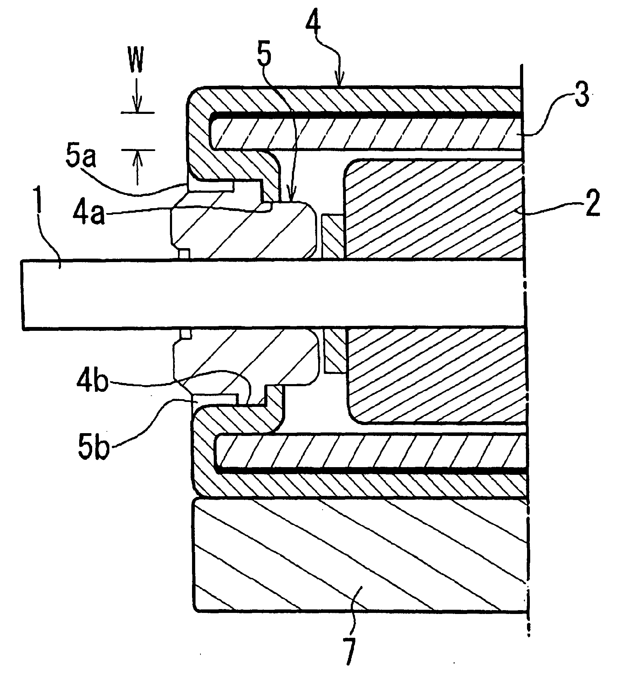

The magnetic yoke has a sunken concavity 4b with a through hole 4a opened in the inward surface formed curving inward from one end, and the bearing 5 on one end is fitted through the through hole 4a of the sunken cavity 4b and fastened to the magnetic yoke 4 as a single piece, as shown in figure 6. The bearing 5 can have cutout grooves 5a, 5b at regular intervals around the circumference that are filled with an adhesive to unite it securely to the magnetic yoke 4. In this magnetic yoke 4, the bearing 5 is fitted around the centerline of the shaft 1, and so it is easily assembled by mounting it in a position parallel to the shaft 1.

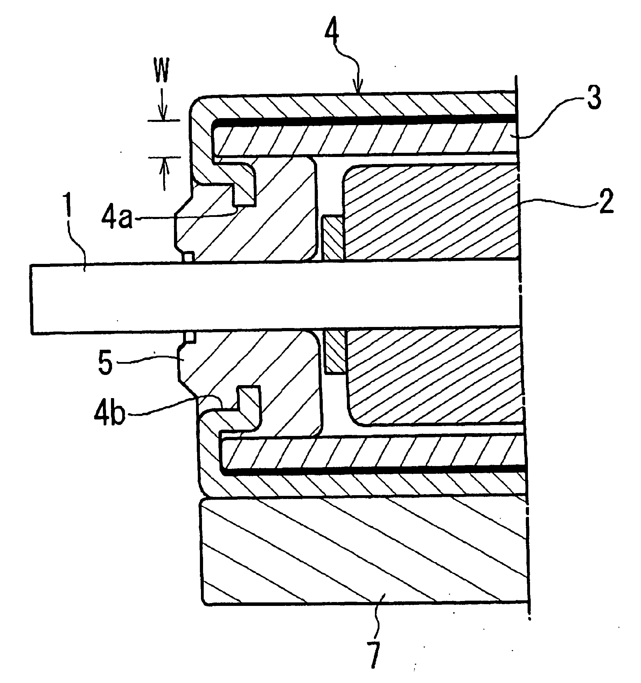

Instead of fitting and fixing the bearing in that way, it is possible to assemble the bearing 5 as a single piece with the magnetic yoke 4 by molding it through the through hole 4a from the sunken cavity 4b, as shown in figure 7. The sunken cavity 4b is formed curving inward with a given space W separating it from the inner surface of the magnetic yoke 4, and the excitation coil 3 is assembled more securely by coating the inner surface of the magnetic yoke 4 with an adhesive and fitting one end of the excitation coil 3 into the space W.

This small, vibrating motor is assembled with an external case 15 that accommodates the motor, stator, rotor and all, and so by holding the external case 15 with a chuck, suction nozzle or similar device, it can be assembled into the larger equipment by means of surface mounting, the same as other assembly part

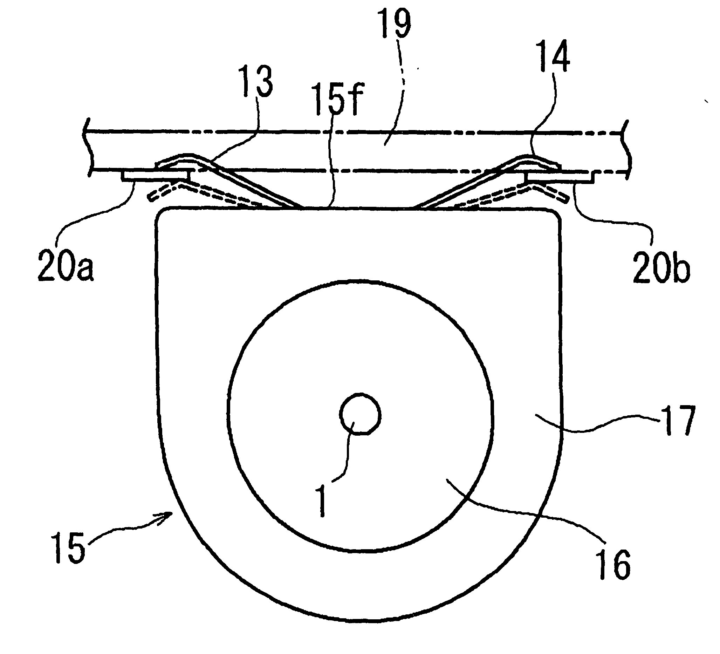

When mounting this small, vibrating motor, it can be mounted with the external terminals 13, 14 pressing against the power feed lands 20a, 20b of the circuit board 19, as shown in figure 8, so that they connect electrically with the power feed lands 20a, 20b by means of deformation under pressure. If this small, vibrating motor is assembled with an external case 15 that has a flat surface 15f on the side facing the circuit board 19, a damper (not illustrated) of flexible material can be sandwiched between the flat surface 15f and the circuit board 19 to provide shock absorption.

The terms and expressions used in the specification of this invention are used simply for the purpose of explanation, and do not limit the content of the invention in any way. The use of any limiting terms or expressions is not intended to exclude thereby any equivalent mode of implementation or part thereof. It is clear, therefore, that it is possible to make various changes within the scope of the invention for which rights are claimed.

### POTENTIAL FOR INDUSTRIAL USE

Using the small, vibrating motor of this invention, there is a cup-shaped external case that is open at one end and closed at the other end, with a rising tube in the center of the closed face, which accommodates within it the stator and rotor on the shaft on which the brush seat is mounted, the end of the shaft fitting inside the rising tube from inside the external case so that the external case is positioned parallel to the shaft, and so that the brush seat mounted on the end of the shaft at the open end of the external case is fitted into the open end to hold the external case firmly to the shaft and brush seat, by which means the external case can be accurately positioned parallel to the shaft that serves as the base for assembly, so that the motor can be assembled easily and accurately while avoiding scraping between the eccentric weight and the inner surface of the external case.

Further, in the small vibrating motor of this invention, there is an external case that has stop claws cut and curved inward at the open end, so that the stop claws, by engaging the outer surface of the brush seat that is fitted into the open end, can fix the external shell firmly to the brush seat.

Further, brushes that connect electrically with external terminals are set in the brush seat, and the external case is flat where it faces the surface of the circuit board where the power feed lands, to which the external terminals are connected electrically, are located, so that a damper of flexible material can be sandwiched between the flat surface and the circuit board to provide shock absorption.

Further, there is a magnetic yoke having a sunken concavity with a through hole opened in the inward surface formed curving inward from one end, and the bearing on one end is fitted through the through hole of the sunken cavity and fastened to the magnetic yoke as a single piece. That bearing is fitted on the shaft around its center line, and so the magnetic yoke can be mounted in a position that is set in parallel with the shaft, and easily assembled.

Further, there is a magnetic yoke having a sunken concavity with a through hole opened in the inward surface formed curving inward from one end, and the bearing on one end is fitted through the through hole of the sunken cavity and molded as a single piece with the magnetic yoke. That bearing is fitted on the shaft around its center line, and so the magnetic yoke can be mounted in a position that is positioned in parallel with the shaft, and easily assembled.

Further, there is a magnetic yoke having a sunken concavity formed curving inward from one end, separated from the inner periphery by a fixed gap, with one end of the excitation coil fitted into that gap and the excitation coil fixed to the inner surface and assembled as a single piece with the magnetic yoke.

## Claims

1. A small, vibrating motor having a shaft (1) that is the base for assembly at the center, and the stator comprises field magnets (2) fixed around the center line; a rotor made up of an excitation coil (3) that accommodates within its diameter the field magnets (2), separated by a magnetic gap; a magnetic yoke (4); bearings (5) that support, so that it is free to rotate, the yoke (4), which includes the eccentric weight (7), fitted around the center line from both ends, and the field magnets (2) in between, the bearing at one end having a commutator (8) that connects electrically to the excitation coil (3) of the rotor, and brushes (9) that make sliding contact with the commutator (8) and that are mounted in a brush seat (10) that is assembled with the bearing (5) at one end of the shaft (1); a cup-shaped external case (15) that is open at one end and closed at the other end, with a rising tube (15b) in the center of the closed end, the external case (15) accommodating the stator and rotor and the end of the shaft (1) opposite that where the brush seat (10) is assembled, such that the end of the shaft (1) is fitted into the rising tube (15b) from the inside of the external case (15), thus holding the external case (15) in a position parallel to the shaft (1), and the brush seat (10) that is assembled on the shaft(1) at the open end of the external case is fitted into the open end of the external case (15), with the result that the external case (15) is held in place by the shaft (1) and the brush seat (10), **characterised in that** the excitation coil (3) is fixed within the magnetic yoke (4), an eccentric weight (7) is mounted on the outer periphery of the magnetic yoke, the magnetic yoke (4) having a sunken concavity (4b) with a through hole (4a) opened in the inward surface formed curving inward from one end, and the bearing (5) on one end is fitted through the through hole (4a) of the sunken concavity (4b) and fastened to the magnetic yoke (4) as a single piece, with the bearing (5) fitted on the shaft (1) around its center line, so that the magnetic yoke (4) is mounted in a position parallel to the shaft (1).

2. A small, vibrating motor as described in claim 1, **characterised in that** the bearing (5) on one end is fitted through the through hole (4a) of the sunken concavity (4b) by molding as a single piece with the magnetic yoke (4).

3. A small, vibrating motor as described in claim 1 or 2, **characterised in that** there is an external case (15) that has stop claws (15d, 15e,...) cut and curved inward at the open end (15a), so that the stop claws (15d, 15e,...), by engaging the outer surface of the brush seat (10) that is fitted into the open end (15a), can fix the external shell firmly to the brush seat (10).

4. A small, vibrating motor as described in one of the preceding claims, **characterised in that** brushes (9) that connect electrically with external terminals (13, 14) are set in the brush seat (10), and there is an external case (15) that is flat where it faces the surface of the circuit board (19) where the power feed lands (20a, 20b), to which the external terminals (13, 14) are connected electrically, are located.

5. A small, vibrating motor as described in one of the preceding claims, **characterised in that** said sunken concavity (4b) formed curving inward from one end is separated from the inner periphery by a fixed gap with one end of the excitation coil (3) fitted into that gap and the excitation coil (3) fixed to the inner surface and assembled as a single piece with the magnetic yoke (4).

## Patentansprüche

1. Kleiner Vibrationsmotor mit einer Welle (1), welche die Basis für den Zusammenbau in der Mitte darstellt, und wobei der Stator um die Mittelachse angebrachte Feldmagnete (2) umfasst; einem Rotor, der aus einer Erregerspule (3) besteht, die innerhalb ihres Durchmessers, durch einen Magnetspalt getrennt, die Feldmagnete (2) aufnimmt; einem Magnetjoch (4); Lagern (5), die das Joch (4), das das Exzentergewicht (7) aufweist, frei drehbar lagern und von beiden Enden aus um die Mittelachse angebracht sind, wobei die Feldmagnete (2) dazwischen angeordnet sind, wobei das Lager an einem Ende einen Kommutator (8), der elektrisch an die Erregerspule (3) des Rotors angeschlossen ist, sowie Bürsten (9) aufweist, die mit dem Kommutator (8) in Schleifkontakt kommen und in einem Bürstensitz (10) angebracht sind, der mit dem Lager (5) an einem Ende der Welle (1) montiert ist; einem napfförmigen Außengehäuse (15), das an einem Ende offen und am anderen Ende geschlossen ist, mit einem Steigrohr (15b) in der Mitte des geschlossenen Endes, wobei im Außengehäuse (15) der Stator und der Rotor sowie das Ende der Welle (1) aufgenommen sind, das demjenigen entgegengesetzt ist, an dem der Bürstensitz (10) montiert ist, derart, dass das Ende der Welle (1) vom Inneren des Außengehäuses (15) aus in das Steigrohr (15b) eingebracht ist, wobei das Außengehäuse (15) somit in einer zur Welle (1) parallelen Stellung gehalten wird, und der am offenen Ende des Außengehäuses an der Welle (1) montierte Bürstensitz (10) in das offene Ende des Außengehäuses (15) eingefügt ist, wodurch das Außengehäuse (15) durch die Welle (1) und den Bürstensitz (10) fixiert ist, **dadurch gekennzeichnet, dass** die Erregerspule (3) innerhalb des Magnetjoches (4) befestigt ist, am Außenumfang des Magnetjoches ein Exzentergewicht (7) angebracht ist, wobei das Magnetjoch (4) eine versenkte Konkavität (4b) mit einer Durchgangsbohrung (4a) aufweist, die in die von einem Ende einwärts gekrümmte, innenliegend gebildete Fläche eingebracht ist, und das Lager (5) an einem Ende durch die Durchgangsbohrung (4a) der versenkten Konkavität (4b) geführt und einstückig am Magnetjoch (4) befestigt ist, wobei das Lager (5) um seine Mittelachse an der Welle (1) befestigt ist, so dass das Magnetjoch (4) in einer zur Welle (1) parallelen Stellung angebracht ist.

2. Kleiner Vibrationsmotor nach Anspruch 1, **dadurch gekennzeichnet, dass** das Lager (5) an einem Ende durch die Durchgangsbohrung (4a) der versenkten Konkavität (4b) geführt ist, indem es einstückig an das Magnetjoch (4) angeformt ist.

3. Kleiner Vibrationsmotor nach Anspruch 1 oder 2, **dadurch gekennzeichnet, dass** ein Außengehäuse (15) vorgesehen ist, das am offenen Ende (15a) eingeschnittene und nach innen gebogene Rastklauen (15d, 15e, ...) aufweist, so dass die Rastklauen (15d, 15e, ...) den Außenmantel durch Angreifen an der Außenfläche des in das offene Ende (15a) eingefügten Bürstensitzes (10) fest am Bürstensitz (10) anbringen können.

4. Kleiner Vibrationsmotor nach einem der vorhergehenden Ansprüche, **dadurch gekennzeichnet, dass** Bürsten (9), die an Außenanschlussklemmen (13, 14) elektrisch angeschlossen sind, in den Bürstensitz (10) eingesetzt sind und ein Außengehäuse (15) vorgesehen ist, das dort flach ist, wo es der Fläche der Leiterplatte (19) zugewandt ist, wo sich die Stromzufuhrkontaktflecken (20a, 20b) befinden, an die die Außenanschlussklemmen (13, 14) elektrisch angeschlossen sind.

5. Kleiner Vibrationsmotor nach einem der vorhergehenden Ansprüche, **dadurch gekennzeichnet, dass** die von einem Ende einwärts gekrümmt ausgebildete, versenkte Konkavität (4b) vom Innenumfang durch einen festen Spalt getrennt ist, wobei ein Ende der Erregerspule (3) in diesen Spalt eingefügt ist und die Erregerspule (3) an der Innenfläche befestigt und einstückig mit dem Magnetjoch (4) montiert ist.

## Revendications

1. Petit moteur vibrant présentant un arbre (1) qui est la base pour l'assemblage au centre, et le stator comprenant des inducteurs (2) fixés autour de l'axe central; un rotor composé d'une bobine d'excitation (3) qui, séparée par un écartement magnétique, reçoit dans son diamètre les inducteurs (2); une culasse magnétique (4); des supports (5) qui portent la culasse (4) comportant le poids excentrique (7) de manière à ce qu'elle puisse tourner librement, et qui sont agencés autour de l'axe central à partir des deux extrémités, les inducteurs (2) étant ménagés entre eux, le support à une extrémité ayant un collecteur (8) relié électriquement à la bobine d'excitation (3) du rotor, et des balais (9) qui viennent en contact glissant avec le collecteur (8) et qui sont agencés dans un siège de balais (10) lequel est monté avec le support (5) à une extrémité de l'arbre (1); un boîtier extérieur (15) en forme de cuvette ouvert à une extrémité et fermé à l'autre extrémité, avec un tuyau montant (15b) au centre de l'extrémité fermée, le boîtier extérieur (15) recevant le stator et le rotor ainsi que l'extrémité de l'arbre (1) opposée à celle où est monté le siège de balais (10) de telle sorte que l'extrémité de l'arbre (1) est insérée dans le tuyau montant (15b) depuis l'intérieur du boîtier extérieur (15), le boîtier extérieur (15) étant ainsi maintenu dans une position parallèle à l'arbre (1), et le siège de balais (10) monté sur l'arbre (1) à l'extrémité ouverte du boîtier extérieur est inséré dans l'extrémité ouverte du boîtier extérieur (15), le boîtier extérieur (15) étant ainsi maintenu en place par l'arbre (1) et le siège de balais (10), **caractérisé en ce que** la bobine d'excitation (3) est fixée à l'intérieur de la culasse magnétique (4), un poids excentrique (7) est agencé sur la périphérie extérieure de la culasse magnétique, la culasse magnétique (4) ayant une concavité enfoncée (4b) avec un trou de passage (4a) ouvert à la surface intérieure formée de manière courbée vers l'intérieur à partir d'une extrémité, et le support (5) à une extrémité est inséré à travers le trou de passage (4a) de la concavité enfoncée (4b) et est fixé d'un seul tenant sur la culasse magnétique (4), le support (5) étant fixé sur l'arbre (1) autour de son axe central de telle sorte que la culasse magnétique (4) est agencée dans une position parallèle à l'arbre (1).

2. Petit moteur vibrant selon la revendication 1, **caractérisé en ce que** le support (5) à une extrémité est inséré à travers le trou de passage (4a) de la concavité enfoncée (4b) en étant façonné d'un seul tenant avec la culasse magnétique (4).

3. Petit moteur vibrant selon la revendication 1 ou 2, **caractérisé en ce qu'**il est prévu un boîtier extérieur (15) présentant des griffes d'arrêt (15d, 15e, ...) découpées et courbées vers l'intérieur à l'extrémité ouverte (15a) de sorte que les griffes d'arrêt (15d, 15e, ...) peuvent fixer l'enveloppe extérieure de manière solidaire au siège de balais (10) en engageant la surface extérieure du siège de balais (10) inséré dans l'extrémité ouverte (15a).

4. Petit moteur vibrant selon l'une des revendications précédentes, **caractérisé en ce que** des balais (9) reliés électriquement à des bornes de raccord extérieures (13, 14) sont placés dans le siège de balais (10), et il est prévu un boîtier extérieur (15) qui est plat à l'endroit où il fait face à la surface de la carte de circuits imprimés (19) où se trouvent les surfaces de contact d'alimentation en énergie (20a, 20b) auxquelles les bornes de raccord extérieures (13, 14) sont reliées électriquement.

5. Petit moteur vibrant selon l'une des revendications précédentes, **caractérisé en ce que** la concavité enfoncée (4b) et formée de manière courbée vers l'intérieur à partir d'une extrémité est séparée de la périphérie intérieure par un écartement fixe, une extrémité de la bobine d'excitation (3) étant insérée dans cet écartement et la bobine d'excitation (3) étant fixée à la surface intérieure et montée d'un seul tenant avec la culasse magnétique (4).
